Europäisches Patentamt

European Patent Office

Office européen des brevets

(11) Veröffentlichungsnummer : **0 354 952 B1**

(12) **EUROPÄISCHE PATENTSCHRIFT**

(45) Veröffentlichungstag der Patentschrift :
**01.07.92 Patentblatt 92/27**

(21) Anmeldenummer : **89902762.7**

(22) Anmeldetag : **17.02.89**

(86) Internationale Anmeldenummer :
**PCT/EP89/00149**

(87) Internationale Veröffentlichungsnummer :
**WO 89/07485 24.08.89 Gazette 89/20**

(51) Int. Cl.⁵ : **B01D 53/08,** B01D 46/34,
C10K 1/24, C10K 1/30,
B01J 8/12

(54) **SCHACHT MIT EINEM WANDERBETT AUS RIESELFÄHIGEM GUT.**

(30) Priorität : **19.02.88 DE 3805198**

(43) Veröffentlichungstag der Anmeldung :
**21.02.90 Patentblatt 90/08**

(45) Bekanntmachung des Hinweises auf die
Patenterteilung :
**01.07.92 Patentblatt 92/27**

(84) Benannte Vertragsstaaten :
**AT BE CH DE FR GB IT LI NL SE**

(56) Entgegenhaltungen :
**EP-A- 0 085 848
WO-A-87/00767**

(73) Patentinhaber : **NYMIC ANSTALT
FL-9494 Schaan (LI)**

(72) Erfinder : **RITTER, Jürgen
Charlottenhöhe 47
W-3300 Braunschweig (DE)**

(74) Vertreter : **Lins, Edgar, Dipl.-Phys. et al
Patentanwälte Gramm + Lins
Theodor-Heuss-Strasse 2
W-3300 Braunschweig (DE)**

## Beschreibung

Die Erfindung betrifft einen Schacht mit einem Wanderbett aus rieselfähigem Gut, das den Querschnitt des Schachts im wesentlichen ausfüllt und ihn von oben nach unten zwischen einer Aufgabevorrichtung und einer Abzugsvorrichtung durchwandert, wobei im unteren Bereich des Wanderbetts mehrere feststehende dachförmige Schüttgutleitprofile nebeneinander jeweils unter Freilassung eines Gutaustrittsspalts angeordnet sind und wobei unterhalb von diesen und diesen zugeordnet mittels einer Antriebsvorrichtung hin- und herbewegbare, zumindest annähernd waagerechte Austragsorgane angeordnet sind, mittels derer die Gutdurchsatzmenge durch Verändern des Hubs und/oder der Frequenz der Hin- und Herbewegung zwischen Null und einem vorgegebenen Maximum dosierbar ist.

Bei den Einrichtungen dieser Art kommt es einerseits darauf an, daß keine verschieden langen Wege einzelner Körner des rieselfähigen Guts während des Abzugsvorgangs im Wanderbett vorhanden sind, so daß praktisch nur eine senkrechte Fließrichtung aber keine Querbewegung der Körner möglich ist, andererseits keine bevorzugten Durchtrittszonen mit Hohlräumen an der Unterseite der Gutsäule entstehen, wodurch unterschiedliche Beladungen der in den Hohlräumen aufgewirbelten Partikel und der angrenzenden Gutzonen entstehen könnten.

Eine weitere Forderung bei Einrichtungen der vorliegenden Art besteht in einer möglichst feinstufigen Variierung des Gutdurchsatzes durch den Schacht und der damit verbundenen Anpassungsfähigkeit an wechselnde Betriebsbedingungen sowohl seitens des rieselfähigen Guts als auch seitens des gasförmigen Mediums. In dieser Beziehung arbeiten die genannten bekannten Einrichtungen unbefriedigend, weil dort nur eine relativ grobstufige Variierung der nebeneinander in der Gitterplatte befindlichen Depottaschen, deren Volumen aus baulichen Gründen und auch wegen der Verstopfungsgefahr nicht beliebig verringert werden kann, ermöglicht ist.

Ein hoher Aufwand ist dort auch für die Antriebsvorrichtung zur Erzielung der Hin- und Herbewegung erforderlich, weil die relativ hohen Reibungskräfte zwischen den feststehenden Stauplatten und der bewegten Gitterplatte sowie die Trägheitskräfte der naturgemäß schweren Gitterplatte zu überwinden sind. Darüber hinaus können zwischen den bewegten Teilen Gutpartikel eingequetscht werden, die zu unkontrollierbaren Widerstandsvergrößerungen führen können. Außerdem kann bei empfindlichen Gütern eine Desintegration oder Beschädigung der Gutpartikel eintreten, welche die Reaktionsfähigkeit des Guts mit dem gasförmigen Medium beeinträchtigen kann.

Der Erfindung liegt die Aufgabe zugrunde, einen Schacht der eingangs erwähnten Art so auszubilden, daß eine feinstufige oder stufenlose Variierbarknit das Gutaustrags und die Verwendung von einfachen Mitteln bei einem geringen Aufwand für die Steuerung zur Erzeugung der Hin- und Herbewegung möglich ist.

Diese Aufgabe wird mit den im Kennzeichen des Anspruchs 1 angegebenen Maßnahmen gelöst.

Erfindungsgemäß wird das Schüttwinkel-Dosierprinzip verwendet, wobei eine feinstufige oder stufenlose Veränderung des Hubs und/oder der Frequenz des Abtriebs für die Hin- und Herbewegung mit einfachen Mitteln verwirklichbar ist. Ein besonders gleichmäßiger Transport des rieselfähigen Guts durch den Schacht wird dadurch erreicht, daß durch die Spaltöffnungen in der wenigstens einen oberen plattenförmigen Etage einer Kegelbildung im Gut entgegengewirkt wird, so daß auch das Gut aus dem Zentrum des durch die Schüttgutleitprofile gebildeten Gutaustrittsspalts abtransportiert wird. Die Dosierung erfolgt ausschließlich durch das Abrieseln des Gutes von der Unterlage und nicht durch Abstreifen, so daß eine vergleichsweise geringe Reibung durch den Antrieb zu überwinden ist und das rieselfähige Gut keiner Gefahr einer Beschädigung durch zwischen Abstreifer und Unterlage auftretenden Scherkräften ausgesetzt ist.

Bei einem sehr gut fließenden Material kann es zu Problemen beim Einfüllen des Guts in den Schacht kommen. Aufgrund der Fallhöhe des Gutes und aufgrund seiner guten Fließfähigkeit kann es passieren, daß das Gut auf der unteren durchgehenden Platte nicht zum Stehen kommt, sondern permanent durchrieselt. Für diesen Fall ist es zweckmäßig, die untere Platte unterhalb der Spaltöffnungen der darüber liegenden Platten symmetrisch zur Spaltöffnung hochklappbar auszubilden, so daß die untere Platte jeweils die Form eines V einnimmt. Der Winkel mit der Horizontalen kann dabei für beide Schenkel beispielsweise 45° betragen. Ist die Füllung des Schachtes erfolgt, kann die untere Platte wieder plan gestellt werden. Da das Gut auf der unteren Platte nunmehr unbeschleunigt aufliegt, findet ein Durchrieseln nicht mehr statt. Vorzugsweise (wird)werden zusammen mit den unteren Platten auch die darüber liegende(n) Platte(n), die mit den unteren Platten mechanisch verbunden sein können, in gleicher Weise verstellt.

In einer besonders bevorzugten Anwendung wird der erfindungsgemäße Schacht zur Abscheidung von in Gas enthaltenen Komponenten, vorzugsweise Schwermetallen und Schwefeldioxid, und zur Entstaubung von gasförmigen, mit Feststoffen beladenen Medien, insbesondere von kalten und heißen Aufbereitungs- und Verbrennungsgasen mittels eines rieselfähigen körnigen Schüttgutes als Filtermedium oder zum Behandeln, vorzugsweise Trocknen oder thermochemischen Behandeln des rieselfähigen körnigen Behandlungsguts mittels eines gasförmigen Behandlungsmedium verwendet, wobei das gasförmige Medium im Gegenstrom zu dem Wanderbett zwischen dessen Aufgabevorrichtung und seiner Abzugsvorrichtung durchströmt wird. Erfindungsgemäß sind die plattenförmigen Etagen und die Schüttgutleitprofile auch für das gasförmige Medium undurchlässig.

Aus der DE-OS 34 06 413 ist ein Schacht für die genannte bevorzugte Anwendung bekannt. Dabei sind die dachförmigen Leitprofile für das rieselfähige Gut undurchlässig, aber für das gasförmige Medium durchlässig. Die Austragsorgane bestehen aus einer gemeinsamen, nach Art eines Lichtgitters ausgebildeten, hin- und herbewegbaren, Depots für Teilmengen des Rieselguts enthaltenden Platte, die von relativ schalen Staubplatten getragen ist, die sich jeweils unterhalb der Gutdurchtrittsspalten befinden und über deren Ränder das Gut bei dem Hin- und Hergang aus den Depots abrieselt. Da die Leitprofile den Durchtritt für das gasförmige Medium gestatten müssen, aber für das rieselfähige Gut undurchlässig sind, müssen sie mit extrem feinen Bohrungen oder schmalen Spalten versehen sein, was naturgemäß zu erheblichen Durchströmungswiderständen führt, zumal die Gefahr des Zusetzens durch Verunreinigungen gegeben ist. Der Aufwand für den Antrieb der Fördervorrichtungen für das gasförmige Medium ist bei diesen Anlagen daher relativ hoch.

Ähnliches gilt für die Einrichtungen nach der DE-OS 36 11 953, deren prinzipieller Aufbau mit der Einrichtung aus der DE-OS 34 06 413 übereinstimmt und lediglich der Ausbildung der Austragsorgane abweicht. Dort ist nämlich die Gitterplatte feststehend ausgebildet, während oberhalb und unterhalb von dieser je eine Siebplatte hin- und herbewegbar ist. Hier tritt demgemäß der Durchströmungswiderstand besonders stark in Erscheinung. Auch der Antriebsaufwand ist größer, weil für die Antriebs- und Steuerorgane zur Erzielung der Hin- und Herbewegung zwei getrennte Antriebe, einer für die obere und einer für die untere Siebplatte, erforderlich sind, die außerdem noch gegenläufig arbeiten müssen. Darüber hinaus besteht eine Gefahr der Beschädigung des rieselfähigen Guts durch die gegeneinander bewegten Teile der Austriebsvorrichtung.

Die erfindungsgemäße Anordnung in ihrer besonderen Gestaltung der Austrittsorgane als "auf der Spitze stehender Tannenbaum" erlaubt den Zutritt des gasförmigen Mediums nicht nur zu den äußeren Bereichen der jeweils zwischen den Leitprofilen anstehenden Gutsäule sondern auch zu deren Zentralbereich, so daß die Leitprofile ohne weiteres aus gasundurchlässigem Material gebildet sein können, wodurch nicht nur der Herstellungsaufwand herabgesetzt sondern auch die Gefahr des Verstopfens vermieden wird.

In der DE-OS 32 13 664 ist zwar schon vorgeschlagen worden, bei einer Vorrichtung zur Reinigung von Staubgasen in mehreren Etagen übereinander angeordnete Platten anzuordnen, die hin- und herbewegt werden und bei denen das rieselfähige Gut entsprechend dem durch die Hin- und Herbewegung veränderten Schüttwinkel für die jeweilige Platte hinausrieselt. Jedoch handelt es sich um eine andersartige Entstaubungseinrichtung, weil dort der gesamte Schacht von oben bis unten mit den genannten Etagen durchsetzt ist und das Gas in einem nicht mit Schüttgut gefüllten Zentrum des Schachts geführt wird und durch das Filtermedium im Querstrom hindurchtritt. Der gesamt Schacht ist somit nicht mit einem seinen Querschnitt im wesentlichen ausfüllenden rieselfähigen Gut gefüllt. Bei derartigen Anlagen vergrößert sich die Bauhöhe des Schachtes zur Erzielung der gewünschten Filterwirkung.

Gemäß einer Ausführungsform des Gegenstandes der Erfindung ist vorgesehen, daß sämtliche Austragsorgane, einen einheitlichen Rahmen bildend, miteinander verbunden sind, wobei der Rahmen auf Federelementen gelagert und an die Antriebsvorrichtung für die Hin- und Herbewegung angeschlossen ist. Hiermit wird eine bei sogenannten Schüttelrinnen bekannte lagerungstechnisch und schwingungstechnisch günstige Anordnung angewendet. In einer bevorzugten Ausführungsform sind die plattenförmigen Etagen zusammen mit dem die Hin- und Herbewegung bewirkenden Antriebsmechanismus als ein vorgefertigtes Modul ausgebildet. Demzufolge können die für den mit der Erfindung angestrebten gleichmäßigen Austrag verantwortlichen Einrichtungsteile als ein Modul vorgefertigt und auf ihre Funktionsfähigkeit geprüft werden. Die für die Funktion der Anlage sensiblen Teile können in einen an Ort und Stelle gefertigten Schacht eingesetzt, vorzugsweise eingeschoben werden, wobei der Antrieb außerhalb des Schachts verbleibt. Die übrigen Teile des Schachtes sind für die Funktion des Austrags nicht kritisch. Für manche Anwendungsfälle kann es vorteilhaft sein, die Einrichtung nach der Erfindung bei Zwei- oder Mehrschachtanlagen einzusetzen, bei denen zwei oder mehr komplette Entstaubungs- oder Behandlungsschächte, die vorzugsweise in der Höhenlage zueinander kaskadenartig versetzt sind, in einem sie umfassenden Schachtsystem untergebracht.sind, derart, daß die Teilschächte jeweils an eine gemeinsame Aufgabevorrichtung und eine gemeinsame Abzugsvorrichtung angeschlossen sind.

Mit einer derartigen Anordnung können größere Leistungen hinsichtlich des Gut- und Gasdurchsatzes bewältigt werden und trotzdem die äußeren Abmessungen der Anlage in mäßigen Grenzen gehalten werden.

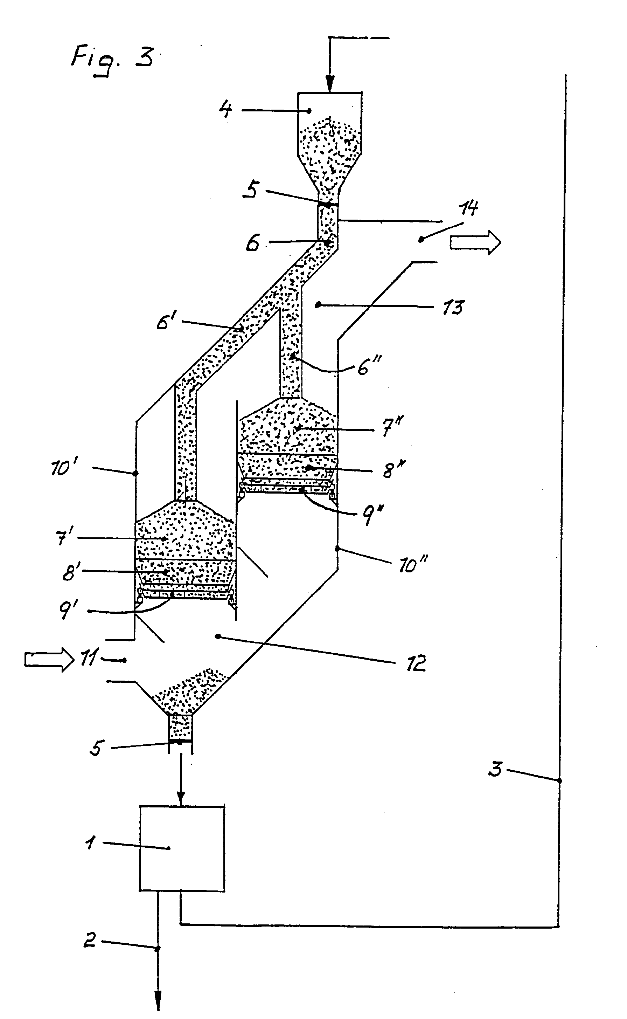

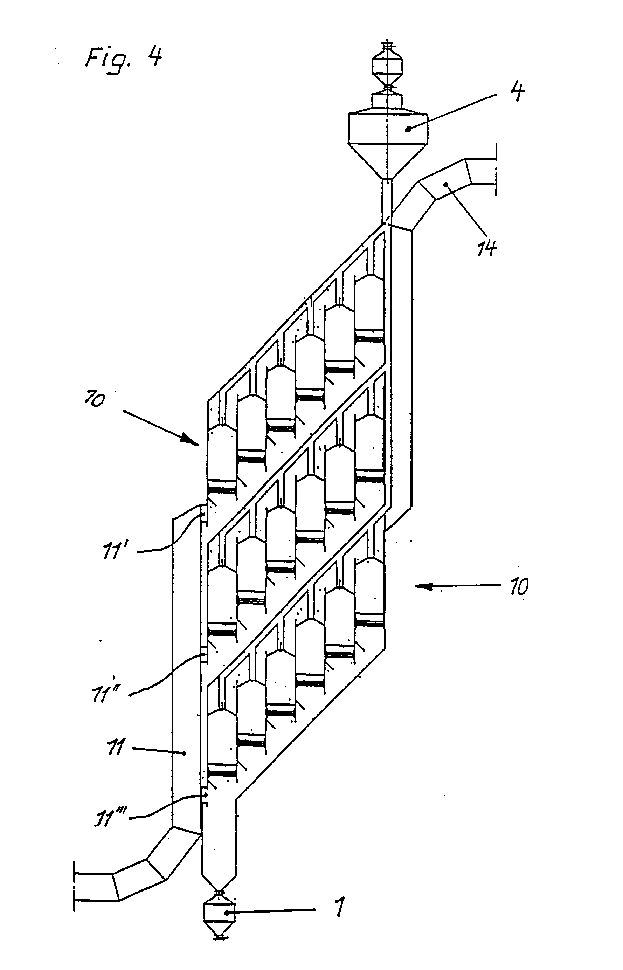

Die Zuführung des Schüttgutes in den Schacht und sein Abzug aus dem Schacht sind automatisch gekoppelt (vgl. Fig. 3 und 4) und daher so gleichmäßig, daß auf eine besondere Durchsatzsteuereinrichtung für den oberen Bereich des Wanderbettes verzichtet werden kann. Die Steuerung des planparallelen Durchsatzes des Wanderbettes durch den Schacht erfolgt allein durch die als Dosiersystem arbeitende Abzugsvorrichtung, mit der eine gleichmäßige und gleichvolumige Entnahme des Schüttgutes aus dem Schacht möglich ist.

Ferner kann die Einrichtung für die Abscheidung von in gasförmigen Medien enthaltenen Komponenten genutzt werden, wie vorzugsweise von Schwermetallen und Schwefeldioxid, wie z. B. durch Einsatz von Aktivkohle oder Herdofenkoks als Adsorbentien. Dabei wird in einem als Schacht ausgebildeten Absorber bedingt durch die Gegenströmung nicht nur der beste Stoffübergang gegenüber anderen Gasführungen wie Kreustrom (Querstrom) oder Kreuzgegenstrom erzielt, sondern es werden alle im Gas enthaltenen Komponenten, die den Adsorptionsprozeß stören würden - wie Staub oder Ammonsalzbildungen aus vorausgehenden Prozeßstufen - unmittelbar auf der Grenzschicht des Schüttgutes an den Gaseintrittsflächen abgeschieben und von dort mittels Schwingeinrichtung gemäß Anspruch 1 ausgetragen.

Dies hat den Vorteil, daß der Druckverlust in einzelnen Zonen der Schüttgutsäule im Reaktionsraum durch vagabundierende Stäube nicht unkontrolliert ansteigt und das Gas nicht zwangsweise die staubfreien Zonen bevorzugt durchströmt. Durch das Freihalten der Schüttgutsäule von Stäuben herrschen im Reaktionsraum weitgehend gleichmäßige Strömungsverhältnisse. Der Austrag der durch Stäube verschmutzten obersten Schicht des Schüttgutes an den Gaseintrittsflächen kann durch Druckverlustmessungen so geregelt werden, daß schon bei geringfügig ansteigendem Druckverlust der Austrag durch Schwingung der Austragvorrichtung erfolgt. Durch diese Maßnahme kann der Druckverlust im Reaktor laufend auf ein Minimum reduziert werden. Diese Einrichtung verhindert also das Eindringen von unerwünschten Feststoffen in den Reaktionsraum, so daß im Reaktionsraum auch keine Verbackungen oder Verklumpungen des Schüttgutes stattfinden können, die seinen Austrag aus dem Reaktor erschweren würden. Die kombinierte Austrags- und Durchströmvorrichtung ist so gestaltet, daß das gasförmige Medium in allen Betriebszuständen das Wanderbett in allen Bereichen durchströmen kann, also keine schwerdurchströmbaren Räume oder gar Toträume vorhanden sind, so daß z.B. bei Einsatz von Aktivkohle oder Herdofenkots keine "hot spots" entstehen können. Das gleiche gilt analog für den Einsatz von Aktivkohle oder Herdofenkoks in einem mit der Austragsvorrichtung gemäß Anspruch 1 ausgestatteten Reaktor für die Entstickung von Abgasen, wobei es hier in erster Linie nicht auf die Adsorptionsfähigkeit des Kohleproduktes ankommt, sondern auf seine katalytische Wirkung unter Einsatz von Ammoniak. Die Einrichtung ist als Filter besonders geeignet für die Abscheidung adhäsiver und klebriger Stäube aus gasförmigen Medien, da diese Stäube unmittelbar auf den Gaseintrittsflächmen, d.h. auf der jeweiligen Oberfläche des auf den Austragsplatten ruhenden, rieselfähigen, körnigen Filtermediums - mit dem jeweiligen Zustand entweder der Ruhelage des Austragsorgans oder seiner Austragsbewegung entspr. Schüttwinkeln - abgeschieden werden. Auch hier ist eine Regelung des Austrags des mit Staub behafteten Filtermediums über Druckverlustmessungen leicht steuerbar.

Die Strömungsgeschwindigkeiten können bei der nach dem Gegenstromprinzip arbeitenden Vorrichtung bis zum Lockerungspunkt des schüttgutartigen Filtermediums frei gewählt werden.

Die Wahl der Strömungsgeschwindigkeit wird in der Regel in der wirtschaftlichen Abwägung zwischen Minimierung der Filterfläche und dem zulässigen Druckverlust erfolgen, soweit nicht technische Gründe eine bestimmte Strömungsgeschwindigkeit oder einen bestimmten Druckverlust vorschreiben.

Durch die Anordnung des Eintrags des Filtermediums in den Schacht (vgl. Fig. 3) ist sichergestellt, daß immer so viel an rieselfähigem Filtermedium in den Filterraum automatisch nachfließt, als am unteren Ende des Schachtes durch die Austragsvorrichtungen an mit Staub beladenen Filtermedium infolge Schwingbewegung der Austragsflächen ausgetragen wird. Dadurch ist sichergestellt, daß das Filterbett bei jedem Betriebszustand die gleiche Höhe - oder Filterbetttiefe - hat.

Die Anordnung des Eintrags des rieselfähigen Filtermediums in den Filterraum erlaubt es aber auch, die Filterbetthöhe zu optimieren, d.h. so gering zu halten, wie es der Filtervorgang erfordert. Damit ist zugleich die Möglichkeit zur Minimierung des Druckverlustes gegeben.

Ein wesentlicher Vorteil der Einrichtung ist auch darin zu sehen, daß ein hoher Freiheitsgrad besteht in der Wahl des Filtermediums und der Werkstoffauswahl für die Ausgestaltung des Vorrichtung. Durch die Verwendung hoch resistenter Materialen - hinsichtlich Temperatur und korrodierenden Angriffe für die Ausgestaltung der Vorrichtung und als Filtermediumkönnen auch heiße Gase bis in den Temperaturbereich von 900°C bis 1000° C entstaubt oder aggressive und sonstige Stoffe aus gasförmigen Medien abgeschieden werden, die dann entweder entsorgt oder im Recycling-Verfahren wieder eingesetzt oder als Wertstoffe weiterverarbeitet werden können. Mit der Vorrichtung lassen sich Probleme lösen, für die es bisher mit anderen Filtersystemen noch keine technisch und wirtschaftlich befriedigende Antworten gab.

Nachstehend wird der Gegenstand der Erfindung anhand von schematischen Skizzen beispielhaft erläutert. Es zeigen:

Fig. 1a einen senkrechten Teilschnitt durch einen mit einem Gutwanderbett gefüllten Schacht mit zweietagigen Austragsorganen in stillstehendem Zustand,

Fig. 1b den gleichen Teilschnitt wie in Fig. 1a, jedoch mit den Austragsorganen im bewegten Zustand,

Fig. 1c einen Teilschnitt entspr. den Fig. 1a und b, jedoch quer dazu,

Fig. 2 ein einzelnes dreietagiges Austragsorgan im vergrößerten Maßstab,

Fig. 3 einen senkrechten Schnitt durch eine Zweischachtanlage

Fig. 4 einen senkrechten Schnitt durch eine Mehrschachtanlage.

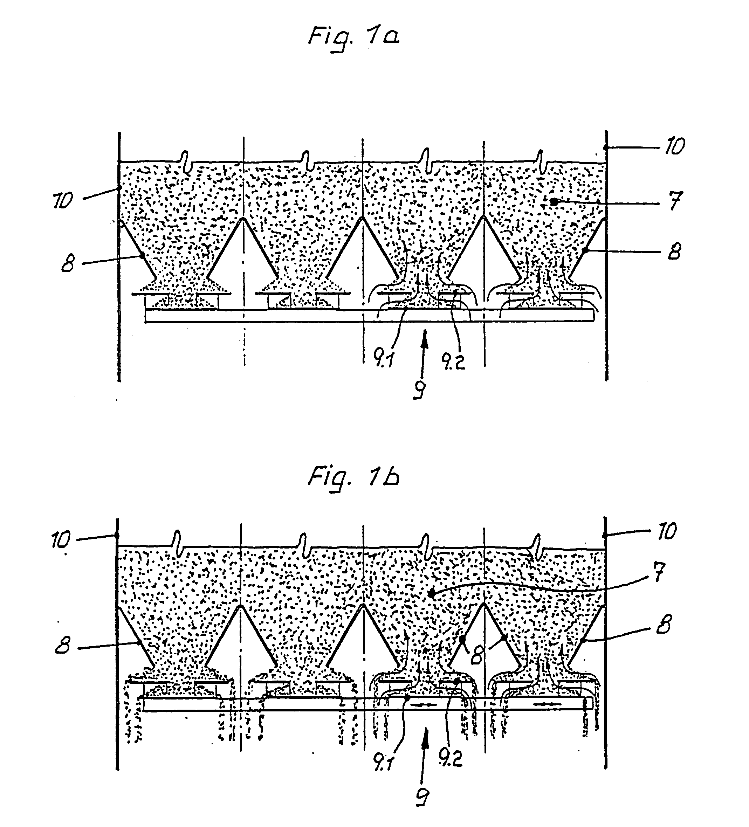

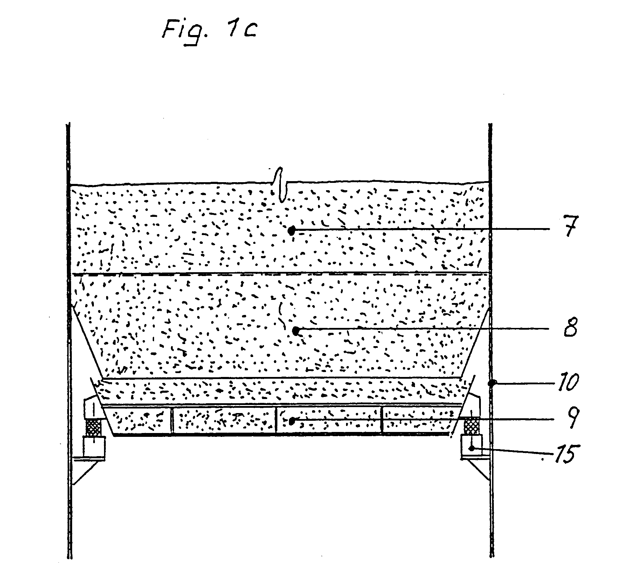

In den Fig. 1a bic c ist jeweils nur derjenige Teil des Schachts und des Gutwanderbetts dargestellt, in dem sich die Gutaustragsorgane befinden, die übrigen Teile der Einrichtung sind bei diesen Darstellungen fortgelassen. Mit 10 ist die Wandung eines im Querschnitt im wesentlichen rechteckigen Schachts bezeichnet, dessen Querschnitt von einem rieselfähigen körnigen Gut ausgefüllt ist, das fortlaufend von oben nach unten den Schacht durchwandert und demgemäß mit Gutwanderbett 7 bezeichnet ist. Am unteren Rand dieses Wanderbetts befinden sich mehrere Leitprofile 8 für das Gut, die jeweils dachartig geformt und in waagerechter Richtung nebeneinander angeordnet sind. Sie verfaufen paarweise parallel zueinander und erstrecken sich von der einen Schachtwand zur gegenüberliegenden und sind an ihren Endpunkten starr mit den Schachtwänden verbunden. Jeweils zwischen zwei Leitprofilen 8 ist ein Durchtrittsspalt ausgespart, dessen Breite entspr. der Zahl der Durchtrittsspalte und dem maximal gewünschten Gutdurchsatz durch den Schacht bemessen ist.

In geringzm Abstand unterhalb jedes Durchtrittsspalts sind bei den Ausführungen nach Fig. 1a bis c zwei Platten 9.1, 9.2 aus sowohl für das Gut als auch für das gasförmige Medium undurchlässigem Material etagenförmig übereinander angeordnet, wobei die untere Platte 9.1 durchgehend, d.h. ohne Spaltöffnung, ausgebildet ist und die obere Platte 9.2 breiter ausgebildet ist als die untere Platte und eine mittige Spaltöffnung aufweist, die parallel zur Längserstreckung der oberen Platte verläuft. Diese Plattenetagen stellen in sich starre Gebilde dar, die mit einem gemeinsamen Lenker starr verbunden sind, der seinerseits mit einer nicht dargestellten Antriebsvorrichtung zusammenwirkt.

Der vertikale Abstand zwischen dem Durchtrittsspalt sowie den Etagen einerseits und die Breite der Spaltöffnung andererseits ist so bemessen, daß bei ruhender Hin- und Herbewegung die sich beim Gutaustritt aus den Gutaustrittsspalten bildenden Gutböschung nicht ausreicht, um das Gut über die inneren und äußeren Ränder der Platten hinausrieseln zu lassen. Bei diesem Betriebszustand ist somit jeglicher Gutdurchsatz durch den Schacht unterbrochen. Bei Inbetriebnahme der Hin- und Herbewegung verringert sich der Schütt- oder Böschungswinkel, so daß nunmehr das Gut über die inneren und äußeren Ränder der Platten hinausrieselt, und zwar in Abhängigkeit von der Frequenz und dem Hub der Hin- und Herbewegung. Durch Veränderung dieser Parameter hat man es in der Hand, den Gutdurchsatz von Null bis zu einem vorgegebenen Maximum zu steuern.

Bei dem Gegenstand der Erfindung kann diese Steuerung unschwer feinstufig oder gar stufenlos erfolgen, weil hierzu lediglich der Antrieb für die Hin- und Herbewegung entspr. eingesteuert werden muß, was mit einfachen Mitteln erzielbar ist und demgemäß weder dargestellt noch im einzelnen beschrieben zu werden braucht.

In der Fig. 1c ist unter Fortlassung von verschiedenen Einzelheiten die Lagerung des die einzelnen etagenförmigen Austragsorgane tragenden Rahmen 9 an den Behälterwänden 10 erkennbar gemacht. Es handelt sich hierbei um in der Fördertechnik an sich übliche federnde Schwingungselemente 15, die vorzugsweise aus gummielastischem Kunststoff gefertigt sind und gleichzeitig eine Tragfunktion und eine die Hin- und Herbewegung fördernde Funktion ausüben.

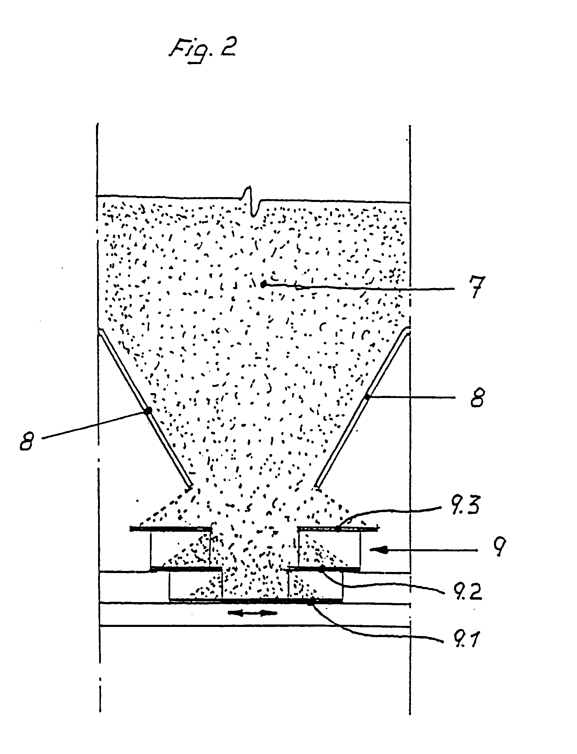

Bei der Ausführungsart nach Fig. 2 liegt ein dreietagiges Plattengebilde 9.1, 9.2, 9.3 vor. bei dem die Platten der zweiten Etage 9.2 und der dritten Etage 9.3 je eine mittige Spaltöffnung aufweisen, wobei die Spaltöffnung der dritten Etage breiter ist als die der zweiten, so daß gleichsam eine Art "auf der Spitze stehender Tannenbaum" vorliegt.

Die Zahl der Etagen könnte auch auf mehr als drei gesteigert werden, wobei für den jeweiligen Anwendungsfall die dadurch bedingte Vergrößerung der Bauhöhe in Betracht gezogen werden müß.

Wesentlich ist nur, daß durch die vorbeschriebene Bemessung der Platten und ihrer Spaltöffnungen sowie durch ihre etagenförmige Anordnung die aus den Gutaustrittsspalten austretende Gutsäule sich im Kern nach unten verengt und seitlich aufgefächert wird, um so dem gasförmigen Medium bei sämtlichen Betriebsbedingungen, also auch bei Stillstand der Hin- und Herbewegung, einen optimalen Zutritt zu sämtlichen Bereichen, also auch zum Kern, der Gutsäule zu gestatten.

In der Fig. 3 ist eine Anwendungsform der erfindungsgemäßen Einrichtung bei einer Anlage mit zwei kaskadenartig angeordneten Entstaubungsschächten dargestellt, wobei hier die komplette Anlage gezeigt ist. Aus einem gemeinsamen Silo 4 für gereinigtes Gut strömt das Gut über einem Schieber 5 in einen Kanal 6 und nach Aufzweigung in die Zuführungskanäle 6', 6'' in die Schächte 10', 10'', in denen es je ein Wanderbett 7', 7'' bildet, das mit den in den Fig. 1a bis c und 2 beschriebenen Leitprofilen 8', 8'' und Abzugsvorrichtungen 9', 9'' ausgestattet ist. Unterhalb dieser Vorrichtungen sind die beiden Schächte 10', 10'' zu einem gemeinsamen Auffangtrichter 12 für das Gut vereinigt, der über einen Schieber 5 in eine Reinigungsvorrichtung 1 für beladenes Gut mündet, in dem das Gut entstaubt und über eine Rückführungsleitung 3 in den Silo 4 für gereinigtes Gut zurückgeleitet wird, während der Staub aus der Reinigungsvorrichtung 1 über einen Staubaustrag 2 abgeführt wird. Der genannte Auffangtrichter 12 dient zugleich als Anströmraum für das gasförmige Rohmedium, in das es durch einen Rohgaseintritt 11 gelangt. Von dem Anströmraum 12 tritt das Rohgas je zur Hälfte in die beiden Schächte 10',10'' ein und durchströmt im Gegenstrom die Gutbetten 7',7'', um oberhalb von diesen in einen gemeinsamen trichterförmig verengten Reingassammelraum 13 einzumünden, von dem es durch den Reingasaustritt 14 abgeführt wird.

Bei der in Fig. 4 dargestellten Anlage sind drei - es können auch vier oder mehr sein - Mehrschachtanlagen der Art, wie sie oben zu Fig. 3 angesprochen worden sind, zu einer Großanlage, auch Adsorberanlage genannt, zusammengefaßt, wobei die Mehrschachtanlagen übereinander in einem Großschachtsystem angeordnet sind und wobei die Gutaufgaben jeder Mehrschachtanlage von einem gemeinsamen Silo 4 für unbeladenes Schüttgut gespeist sind. Die Wandungen der Gutzuführungskanäle der mittleren und untersten Mehrschachtanlage wirken hierbei als Auffangtrichter für die oberste und mittlere Mehrschachtanlage, während für die unterste Mehrschachtanlage die Wandung des Großschachtes als Auffangtrichter wirkt. Sämtliche Auffangtrichter münden in ein gemeinsames Sammelsilo 1 für das beladene Schüttgut.

Gasseitig erfolgt die Beaufschlagung der einzelnen Auffangtrichter über je einen Rohgaseintritt 11',11'' die von einer gemeinsamen Rohgasleitung 11 abgezweigt sind. Das Reingas wird in sinngemäß gleicher Weise in einer gemeinsamen Reingasleitung 14 zusammengefaßt und abgeführt.

**Patentansprüche**

1. Schacht mit einem Wanderbett (7) aus rieselfähigem Gut, das den Querschnitt des Schachts im wesentlichen ausfüllt und ihn von oben nach unten zwischen einer Aufgabevorrichtung und einer Abzugsvorrichtung durchwandert, wobei im unteren Bereich des Wanderbetts mehrere feststehende dachförmige Schüttgutleitprofile (8, 8',8'') nebeneinander jeweils unter Freilassung eines Gutaustrittsspalts angeordnet sind und wobei unterhalb von diesen und diesen zugeordnet mittels einer Antriebsvorrichtung hin- und herbewegbare, zumindest annähernd waagerechte Austragsorgane (9) angeordnet sind, mittels derer die Gutdurchsatzmenge durch Verändern des Hubs und/oder der Frequenz der Hin- und Herbewegung zwischen Null und einem vorgegebenen Maximum dosierbar ist, dadurch gekennzeichnet, daß die Austragsorgane (9) jeweils aus mindestens zwei übereinander angeordneten, für das Gut undurchlässigen plattenförmigen Etagen (9.1, 9.2, 9.3, ...) bestehen, von denen die unterste eine über die Breite des zugehörigen Gutaustrittsspalts durchgehende Platte (9.1) ist, während die über den durchgehenden Platten (9.1) befindlichen Platten (9.2, 9.3, ...) Spaltöffnungen über den durchgehenden Platten (9.1) aufweisen, derart, daß das Gut bei Stillstand der Austragsorgane - entsprechend dem diesem Zustand zugehörigen Schüttwinkel - auf der jeweils darunter liegenden Platte verbleibt, bei bewegten Austragsorganen das Gut entsprechend dem diesem Zustand zugehörigen Schüttwinkel über die Ränder der Platten hinausrieselt.

2. Schacht nach Anspruch 1, der zur Abscheidung von in Gas enthaltenen Komponenten oder zum Behandeln des rieselfähigen körnigen Behandlungsgutes mit einem gasförmigen Behandlungsmedium von dem gasförmigen Medium im Gegenstrom durchströmt wird, dadurch gekennzeichnet, daß die plattenförmigen Etagen (9.1, 9.2, 9.3, ...) und die Schüttgutleitprofile (8) für das gasförmige Medium undurchlässig sind.

3. Schacht nach Anspruch 1 oder 2, dadurch gekennzeichnet, daß sämtliche Austragsorgane, einen einheitlichen Rahmen bildend, miteinander verbunden sind, wobei der Rahmen auf Federelementen (15) gelagert und an die Antriebsvorrichtung für die Hin- und Herbewegung angeschlossen ist.

4. Schacht nach Anspruch 3, dadurch gekennzeichnet, daß die plattenförmigen Etagen (9.1, 9.2, 9.3, ...) zusammen mit dem Antriebsmechanismus für die Hin- und Herbewegung als ein in den Schacht (10) einschiebbares Modul ausgebildet sind.

5. Schacht nach einem der Ansprüche 1 bis 4, bei dem zwei oder mehrere komplette Entstaubungs- oder Behandlungsschächte, vorzugsweise kaskadenartig gegeneinander versetzt, in einem sie umfassenden Schacht untergebracht sind, derart, daß die Teilschächte jeweils an eine gemeinsame Aufgabevorrichtung (4, 5) und eine gemeinsame Abzugsvorrichtung (5, 1) angeschlossen sind.

6. Schacht nach Anspruch 5, dadurch gekennzeichnet, daß zwei oder mehr Anlagen in einem umfassenden Schachtsystem (10) übereinander angeordnet sind, wobei die Anlagen gutaufgabeseitig an eine gemeinsame Aufgabevorrichtung (4) und gutabzugsseitig an eine gemeinsame Abzugsvorrichtung (1) angeschlossen sind.

7. Schacht nach einem der Ansprüche 1 bis 6, dadurch gekennzeichnet, daß die Spaltöffnungen in einer oberen Platte (9.2, 9.3,) mittig unter den Gutaustrittspalten und quer zur Richtung der Hin- und Herbewegung angeordnet sind.

8. Schacht nach einem der Ansprüche 1 bis 7, dadurch gekennzeichnet, daß die untersten Platten (9.1) jeweils symmetrisch zu den über ihnen befindlichen Spaltöffnungen bzw. den Gutaustrittsspalten beidseitig zur Form eines V hochstellbar ausgebildet sind.

EP 0 354 952 B1

## Claims

1. Shaft having a migration bed (7) of tricklable material which substantially fills the cross-section of the shaft and migrates through it from top to bottom between a charging device and a removal device, there being arranged in the lower region of the migration bed a plurality of fixed roof-shaped bulk material-guiding profiled sections (8, 8′, 8″) next to one another, in each case leaving free an exit gap for material, and there being arranged below these and associated therewith by means of a drive apparatus at least approximately horizontal discharge members (9) which are movable to and fro and by means of which the throughput quantity of arterial may be metered between zero and a predetermined maximum by altering the stroke and/or the frequency of the to-and-fro movement, characterized in that the discharge members (9) comprise at least two plate-shaped platforms (9.1, 9.2, 9.3, etc.) which are arranged one above the other and are impermeable to the material and of which the lowest is a continuous plate (9.1) extending over the width of the associated material exit gap, while the plates (9.2, 9.3, etc.) above the continuous plates (9.1) have gap openings above the continuous plates (9.1) such that, when the discharge members are at a standstill - in accordance with the dumping angle associated with this state - the material remains on the plate which is respectively underneath, and when the discharge members are moved the material - corresponding to the dumping angle associated with this state - trickles out over the edges of the plates.

2. Shaft according to Claim 1, which, for separating off constituents contained in gas or for treating the tricklable granular treatment material with a gaseous treatment medium, is flowed through in counter-current by the gaseous medium, characterized in that the plate-shaped platforms (9.1, 9.2, 9.3, etc.) and the bulk material-guiding profiled sections (8) are impermeable to the gaseous medium.

3. Shaft according to Claim 1 or 2, characterized in that all the discharge members, forming a unified frame, are connected to one another, the frame being mounted on spring elements (15) and connected to the drive apparatus for the to-and-fro movement.

4. Shaft according to Claim 3, characterized in that the plate-shaped platforms (9.1, 9.2, 9.3, etc.) are constructed, together with the drive mechanism for the to-and-fro movement, as a module which can be inserted in the shaft (10).

5. Shaft according to one of Claims 1 to 4, in which two or more complete de-dusting or treatment shafts, preferably offset with respect to one another in the manner of a cascade, are accommodated in a shaft surrounding them such that the part shafts are each connected to a common charging apparatus (4, 5) and a common removal apparatus (5, 1).

6. Shaft according to Claim 5, characterized in that two or more units are arranged above one another in a surrounding shaft system (10), the units being connected on the material-charging side to a common charging apparatus (4) and on the material-removal side to a common removal apparatus (1).

7. Shaft according to one of Claims 1 to 6, characterized in that the gap openings in an upper plate (9.2, 9.3,) are arranged centrally below the material exit gaps and transversely to the direction of the to-and-fro movement.

8. Shaft according to one of Claims 1 to 7, characterized in that the lowest plates (9.1) are each constructed to be height-adjustable, symmetrically to the gap openings or the material exit gaps above them, on either side to form a V.

## Revendications

1. Cuve contenant un lit mouvant (7) de matière à écoulement libre, qui remplit essentiellement toute la section de la cuve et progresse au travers de celle-ci, de haut en bas, entre un dispositif d'alimentation et un dispositif d'évacuation, étant entendu que, dans la zone inférieure du lit mouvant, plusieurs éléments de guidage profilés pour la matière en vrac, fixes et en forme de toit (8, 8′, 8″), sont disposés l'un à côté de l'autre en ménageant chaque fois une fente de sortie pour la matière et qu'en dessous de ces éléments de guidage et en association avec ceux-ci sont installés des organes de décharge (9) au moins approximativement horizontaux, pouvant Etre animés d'un mouvement de va-et-vient au moyen d'un dispositif d'entraînement, par lesquels la quantité de matière débitée peut Etre dosée par une modification de la course et/ou de la fréquence du mouvement de va-et-vient entre zéro et un maximum prédéfini, caractérisée en ce que les organes de décharge (9) sont constitués chacun d'au moins deux étages en forme de plateaux superposés et ne laissant pas passer la matière (9.1, 9.2, 9.3, ...), dont l'étage inférieur est un plateau (9.1) continu sur toute la largeur de la fente de sortie associée pour la matière, tandis que les plateaux (9.2, 9.3, ...) se trouvant au-dessus des plateaux continus (9.1) présentent des orifices de fente, au-dessus des plateaux continus (9.1), de telle sorte que la matière, lorsque les organes de décharge sont immobiles, conformément à l'angle de talus associé à cet état, reste en place sur le plateau sous-jacent respectif, tandis que, lorsque les organes de décharge sont en mouvement, la matière, conformément à l'angle de talus associé à cet état, ruisselle par-dessus les bords des plateaux.

2. Cuve suivant la revendication 1 qui, en vue de l'extraction de constituants contenus dans du gaz ou du traitement de la matière granulaire à écoulement libre au moyen d'un milieu de traitement gazeux, est traversée à contre-courant par le milieu gazeux, caractérisée en ce que les étages en forme de plateaux (9.1, 9.2, 9.3, ...) et les éléments de guidage profilés pour la matière en vrac (8) sont imperméables au milieu gazeux.

3. Cuve suivant la revendication 1 ou 2, caractérisée en ce que tous les organes de décharge, formant un cadre d'une seule pièce, sont reliés les uns aux autres, le cadre étant monté sur des éléments à ressort (15) et étant reliés au dispositif d'entraînement en vue du mouvement de va-et-vient.

4. Cuve suivant la revendication 3, caractérisée en ce que les étages en forme de plateaux (9.1, 9.2, 9.3, ...), conjointement avec le mécanisme d'entraînement pour le mouvement de va-et-vient, forment un module pouvant Etre glissé en place dans la cuve (10).

5. Cuve suivant l'une quelconque des revendications 1 à 4, dans laquelle deux ou plus de deux cuves de dépoussiérage ou de traitement complètes, décalées de préférence l'une par rapport à l'autre en cascade, sont installées dans une cuve qui les enveloppe, les cuves partielles étant chacune raccordée à un dispositif d'alimentation commun (4, 5) et à un dispositif d'évacuation commun (5, 1).

6. Cuve suivant la revendication 5, caractérisée en ce que deux ou plus de deux installations sont superposées dans un système de cuve (10) qui les enveloppe, les installations étant raccordées, du côté de l'alimentation de la matière, à un dispositif d'alimentation commun (4) et du côté d'évacuation de la matière, à un dispositif d'évacuation commun (1).

7. Cuve suivant l'une quelconque des revendications 1 à 6, caractérisée en ce que les orifices de fente sont ménagés dans un plateau supérieur (9.2, 9.3) au milieu en dessous des fentes de sortie de matière et perpendiculairement à la direction du mouvement de va-et-vient.

8. Cuve suivant l'une quelconque des revendications 1 à 7, caractérisée en ce que les plateaux inférieurs (9.1) sont conçus réglables en hauteur des deux côtés en forme de V, chaque fois symétriquement par rapport aux orifices de fente qui se trouvent au-dessus d'eux ou aux fentes de sortie de matière.

## Fig. 1a

## Fig. 1b

Fig. 1c

Fig. 2

Fig. 3

Fig. 4